# EUROPEAN PATENT APPLICATION

(11) **EP 4 579 106 A1**
(43) Date of publication of application: **02.07.2025**
(21) Application number: 23857298.6
(22) Date of filing: 18.08.2023
(51) Int. Cl.: F16J 15/18, F16J 15/3204, F16J 15/46

(54) **BEARING SEAL STRUCTURE**

(30) Priority: 26.08.2022 JP 2022134848
(71) Applicant: Miyako, Shigeru, Sapporo-shi, Hokkaido 005-0843 (JP)
(72) Inventor: Miyako, Shigeru, Sapporo-shi, Hokkaido 005-0843 (JP)
(74) Representative: Betten & Resch
(86) International application number: PCT/JP2023/029832
(87) International publication number: WO 2024/043186

(57) **Abstract**

[Problem] To provide a bearing seal structure that makes it possible to prolong the lifespan of a seal ring and extend the time for replacement, and to easily perform replacement work of the seal ring.

[Solution] Provided is a bearing seal structure 1 comprising: a shaft 2 that performs a motion of at least sliding or rotation; a bearing 3 that supports the shaft 2; and a seal ring 4 that keeps watertightness between the shaft 2 and the bearing 3. The bearing 3 has a ring fitting groove 31 formed on an inner circumferential surface thereof to allow the seal ring 4 to be fitted therein, and a fluid injection hole 32 penetrating from the ring fitting groove 31 through to the outside of the bearing. The seal ring 4 has a filling groove 41 for filling, along an outer circumferential surface thereof, with a fluid injected from the fluid injection hole 32, and is formed by an elastic material that can be shrunk in diameter by the pressure when the fluid is injected into the filling groove 41.

## Description

### Technical Field

The present invention relates to a bearing seal structure for maintaining watertightness between a shaft that slides or rotates and a bearing therefor.

### Background Art

A bearing includes a structure that slidably or rotatably supports a shaft. In such a bearing, it is sometimes necessary to maintain watertightness between a shaft and the bearing therefor. For example, a water swivel is an instrument for sending water supply from a pump to the inside of a rotating rod (shaft), and in order to prevent water supplied to the inside of the rod from leaking to the outside, a bearing that supports the rod is required to maintain watertightness between the rod and the bearing.

In addition, a hydraulic cylinder has a housing with a watertightness structure, and a rod that can move in and out through the head side of the housing, so that the rod is moved in and out to extend and retract with a hydraulic pressure applied inside the housing. Thus, the hydraulic cylinder needs to maintain watertightness to prevent leakage of an operating oil from a gap between the housing and the rod, or contamination of a foreign substance inside the housing.

With regard to an invention relating to such a hydraulic cylinder, Japanese Patent Laid-open No. 2019-32066 discloses an invention of a hydraulic cylinder in which three seal rings are provided on the head side of a housing (Patent Literature 1), for example.

### Citation List

### Patent Literature

Patent Literature 1: Japanese Patent Laid-open No. 2019-32066

### Summary of Invention

### Technical Problem

However, the invention disclosed in Patent Literature 1 has a problem in that a contact surface between the seal rings and the rod becomes worn due to repeated sliding of the rod, and a gap is generated. If the gap becomes large, oil leakage or contamination of a foreign substance occurs, resulting in breakdown.

Conventionally, if oil leakage or the like occurs, disassembling work to pull out a rod from a bearing is performed, and after a seal ring is removed from the bearing for replacement with a new seal ring, assembly work is performed again. Such replacement work of the seal ring requires long work time, and this is a great burden.

The present invention has been made to solve the problem as above, and aims to provide a bearing seal structure that can extend the service life of a seal ring to prolong the replacement interval, and facilitate replacement work of the seal ring.

### Solution to Problem

In order to achieve the object, which is to provide a structure capable of extending the service life of a wear-prone seal ring to prolong the replacement interval, a bearing seal structure according to the present invention is a bearing seal structure including: a shaft that performs at least one movement of sliding and rotation; a bearing that supports the shaft; and a seal ring that maintains watertightness between the shaft and the bearing, wherein the bearing has a ring fitting groove formed on an inner circumferential surface into which the seal ring is to be fitted, and a fluid injection hole penetrating from the ring fitting groove to an outside of the bearing, the seal ring has a filling groove configured to be filled with a fluid injected from the fluid injection hole along an outer circumferential surface of the seal ring, and the seal ring is made of an elastic material that is capable of reducing a diameter with a pressure applied when the fluid is injected into the filling groove.

Moreover, in order to achieve the object, which is to enhance the watertightness of the seal ring and facilitate the replacement work, according to one aspect of the present invention, one side surface constituting the ring fitting groove of the bearing may be a groove lid part that is removable, and in a closed state of the groove lid part, a width of the ring fitting groove may be narrower than a width of the seal ring, and the seal ring may be fitted into the ring fitting groove and clamped by the groove lid part such that the seal ring is caused to bulge toward an inner circumference side.

### Advantageous Effect of Invention

According to the present invention, it is possible to extend the service life of a seal ring to prolong the replacement interval, and facilitate replacement work of the seal ring.

### Brief Description of Drawings

[Figure 1] Figure 1 is a partial cross-sectional front view illustrating an embodiment of a bearing seal structure according to the present invention.
[Figure 2] Figure 2 is a partial cross-sectional side view illustrating the bearing seal structure according to the present embodiment.
[Figure 3] Figure 3 is a partial cross-sectional front view of a seal ring in the present embodiment and a ring fitting groove into which the seal ring is not fitted, illustrating a width of the seal ring and a width of the ring fitting groove.
[Figure 4] Figure 4 is a partial cross-sectional front view illustrating a state in which the seal ring in the present embodiment is fitted into the ring fitting groove, is clamped by a groove lid part, and bulges toward an inner circumference side.
[Figure 5] Figure 5 is a perspective view illustrating the seal ring in the present embodiment.
[Figure 6] Figure 6 is a cross-sectional side view illustrating a pressure applied to the seal ring when a fluid is injected into a filling groove, and a state in which the seal ring reduces its diameter due to the applied pressure and adheres to a shaft, in the present embodiment.

### Description of Embodiment

Hereinafter, an embodiment of a bearing seal structure in the present invention will be described using the drawings.

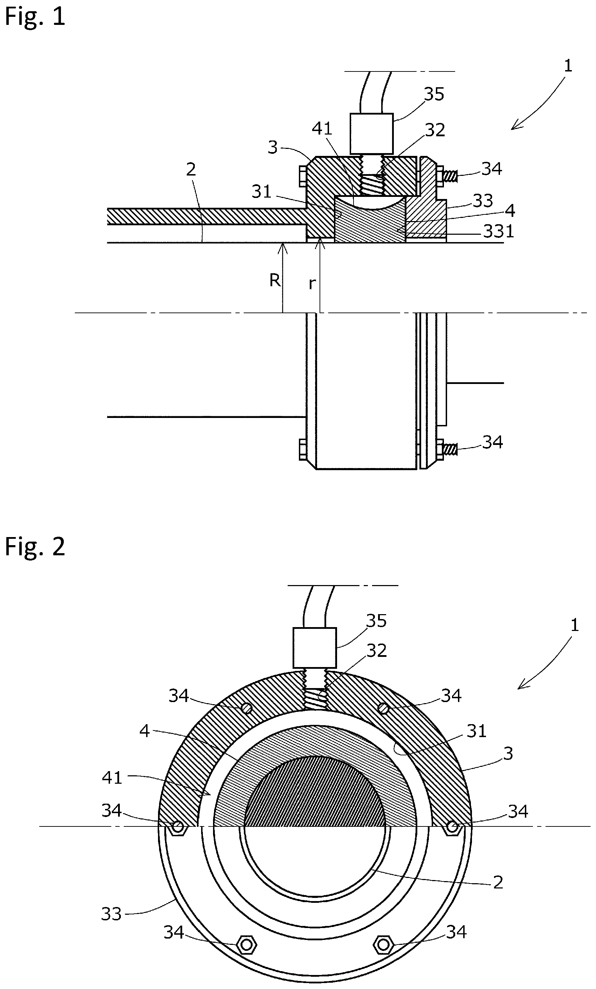

As illustrated in Figure 1 and Figure 2, a bearing seal structure 1 in the present embodiment has a shaft 2, a bearing 3 which supports the shaft 2, and a seal ring 4 which maintains watertightness between the shaft 2 and the bearing 3.

The shaft 2 is a shaft that performs at least one movement of sliding and rotation, and in the present embodiment, the shaft 2 is made of a circular shaft having a circular vertical cross-sectional shape.

The bearing 3 is a bearing that slidably and rotatably supports the shaft 2 against a housing of a hydraulic cylinder, etc. As illustrated in Figure 1, the bearing 3 in the present embodiment has an inner diameter r that is slightly greater than an outer diameter R of the shaft 2, and a ring fitting groove 31 for fitting the seal ring 4 is formed on an inner circumferential surface thereof. In addition, a fluid injection hole 32 penetrating in a manner allowing communication from the ring fitting groove 31 to the outside of the bearing is opened in the bearing 3.

Moreover, in the bearing 3 in the present embodiment, one side surface constituting the ring fitting groove 31 is made of a removable groove lid part 33 such that replacement of the seal ring 4 can be easily performed.

Specifically, as illustrated in Figure 1 and Figure 2, the groove lid part 33 is made of a doughnut-shaped disk with a hole having an inner diameter into which the shaft 2 is insertable, and a holding ring part 331 is formed on the seal ring 4 side. The holding ring part 331 holds the seal ring 4 by being one side surface of the ring fitting groove 31, and the holding ring part 331 is formed in a convex ring shape on the seal ring 4 side of the groove lid part 33. In addition, as illustrated in Figure 2, the groove lid part 33 is removably fastened and fixed with a plurality of bolts 34. In the present embodiment, the fastening and the fixing are performed with six bolts 34 evenly arranged (every 60 degrees) in the circumferential direction, and the seal ring 4 can be evenly held.

As illustrated in Figure 1, the ring fitting groove 31 is a groove for allowing fitting of the seal ring 4, and the ring fitting groove 31 is formed in a concave shape so as to go around the inner circumferential surface of the bearing 3. The ring fitting groove 31 in the present embodiment has one side surface made of the groove lid part 33, as mentioned above.

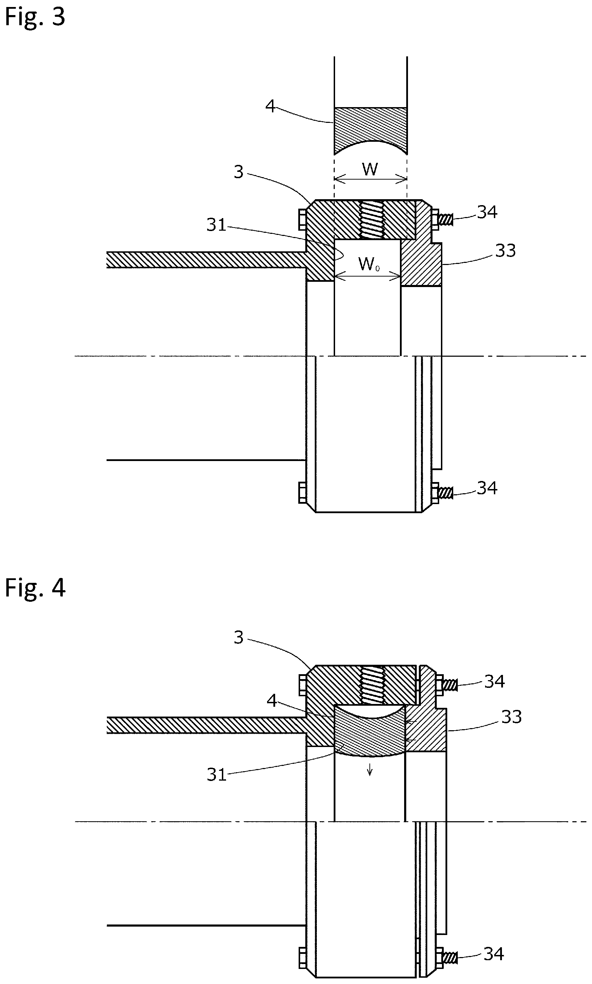

Moreover, as illustrated in Figure 3, the ring fitting groove 31 is formed such that a width W₀ in a closed state of the groove lid part 33 without fitting of the seal ring 4 is narrower than a width W of the seal ring 4. In this manner, as illustrated in Figure 4, when the seal ring 4 is fitted into the ring fitting groove 31 and clamped by the groove lid part 33, the seal ring 4 bulges toward the inner circumference side with the clamping force.

The fluid injection hole 32 is a hole for allowing injection of a fluid into a filling groove 41 of the seal ring 4 fitted into the ring fitting groove 31, and as illustrated in Figure 1 and Figure 2, the fluid injection hole 32 penetrates from a bottom surface 311 of the ring fitting groove 31 to the outside of the bearing so as to allow flow of the fluid. A female screw groove is formed on the inner circumferential surface of the fluid injection hole 32 in the present embodiment, and a check valve 35 for preventing backflow of the injected fluid is screwed into an injection port.

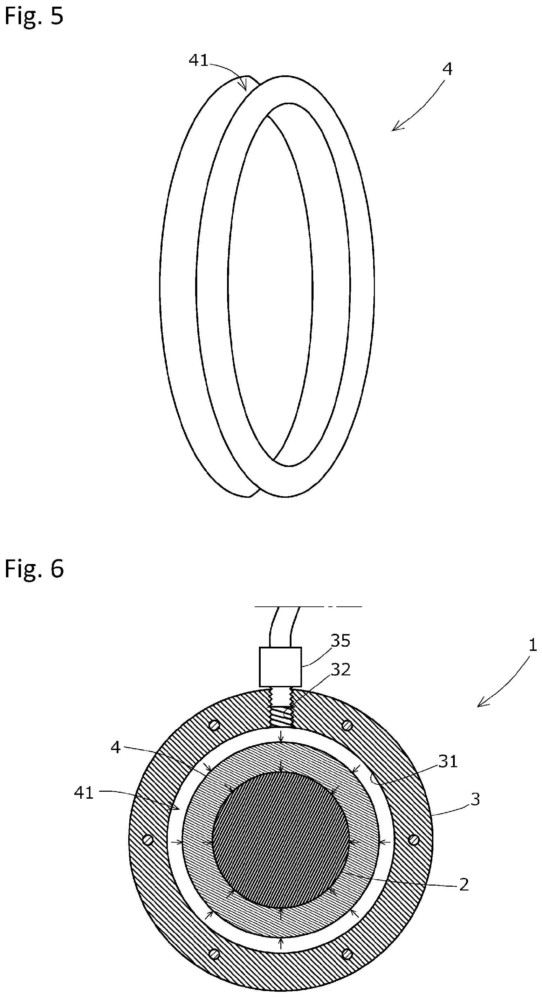

The seal ring 4 is a ring-shaped seal member that maintains watertightness between the shaft 2 and the bearing 3, and as illustrated in Figure 5, the seal ring 4 has the filling groove 41 which fills the fluid injected from the fluid injection hole 32 along an outer circumferential surface thereof. The filling groove 41 is formed in a concave shape so as to go around the outer circumferential surface such that the pressure by the injected fluid is evenly applied to the whole outer circumference, and as illustrated in Figure 1, in the present embodiment, the bottom surface is formed in a curved manner.

In addition, the seal ring 4 is made of an elastic material, and as illustrated in Figure 4, with the seal ring 4 being pressed by fastening force to secure the groove lid part 33 and bulging toward the inner circumference side resulting in enhanced adhesion with the shaft 2, as illustrated in Figure 6, the seal ring 4 reduces its diameter by receiving pressing force to the inner circumference side with pressure of the fluid filled in the filling groove 41.

The injected fluid in the present embodiment is an operating oil for operating a hydraulic machine. Although not illustrated, the check valve 35 is connected with a hydraulic pump that supplies an operating oil pressurized to a pressure higher than the atmospheric pressure. Note that the type of the fluid is not limited, and it may be appropriately selected from a liquid such as water, a gas such as air, etc.

Next, operations of each configuration in the bearing seal structure 1 of the present embodiment will be described.

In the bearing seal structure 1 of the present embodiment, the seal ring 4 is fitted into the ring fitting groove 31 of the bearing 3 where the groove lid part 33 is removed.

Next, the groove lid part 33 is fastened and fixed with the bolts 34. At this time, the seal ring 4 is made of an elastic material, and the width W₀ of the ring fitting groove 31 is narrower than the width W of the seal ring 4. Thus, as illustrated in Figure 4, the seal ring 4 is pushed by the holding ring part 331 of the groove lid part 33 and bulges toward the inner circumference side, and the watertightness between the shaft 2 and the bearing 3 can be maintained.

Moreover, a fluid is filled in the filling groove 41 of the seal ring 4 through the fluid injection hole 32. As illustrated in Figure 6, the filled fluid pushes the seal ring 4 in the inner circumferential direction with its pressure. In this manner, the seal ring 4 reduces its diameter and the adhesion with the shaft 2 will be enhanced. In addition, even if a contact surface between the seal ring 4 and the shaft 2 becomes worn due to deterioration, a gap is unlikely to be generated since the seal ring 4 is subjected to force to reduce its diameter with the pressure from the fluid.

If a gap is generated, by increasing an amount of the injected liquid and elevating an internal pressure of the filling groove 41, the seal ring 4 can further reduce its diameter to fill the gap, and the watertightness can be maintained. Moreover, by further fastening the groove lid part 33 with the fastening bolts 34, the seal ring 4 can bulge toward the inner circumference side to fill the gap. In this manner, even if the seal ring 4 becomes worn, the adjustment to fill the gap with the shaft 2 enables extension of the service life without replacing the seal ring 4.

If the seal ring 4 is severely deteriorated and the watertightness cannot be maintained with the injection of the liquid or the fastening of the groove lid part 33, there is a need to replace the seal ring 4. However, in the present embodiment, since the groove lid part 33 can be removed, the seal ring 4 can be replaced without pulling out the shaft 2 from the bearing 3, which facilitates the replacement work.

According to the present embodiment as above, the following effects can be exerted.
1. Even if the contact surface between the shaft 2 and the seal ring 4 becomes worn due to sliding or rotation of the shaft 2, a pressure of a fluid injected into an outer circumference of the seal ring 4 causes the seal ring 4 to reduce its diameter and fill a gap with the shaft 2 caused by the wear, which can extend the service life of the seal ring 4 to prolong the replacement interval.
2. With a structure in which the removable groove lid part 33 allows the width of the ring fitting groove 31 to be narrower than the width of the seal ring 4, the seal ring 4 is clamped by the groove lid part 33 and bulges toward the inner circumference side, and the adhesion with the shaft 2 can be enhanced. In addition, even if the contact surface between the shaft 2 and the seal ring 4 becomes worn due to sliding or rotation of the shaft 2, since the gap with the shaft 2 caused by the wear is filled by an increased bulging amount due to increased clamping force, which can extend the service life of the seal ring 4 to prolong the replacement interval.
3. Even if the seal ring 4 is severely deteriorated and needs to be replaced, since one side surface of the ring fitting groove 31 into which the seal ring 4 is fitted is the removable groove lid part 33, there is no need to pull out the shaft 2 from the bearing 3, which can facilitate the replacement work.

Note that the bearing seal structure according to the present invention is not limited to the aforementioned embodiment, and appropriate changes can be made. For example, regarding the groove lid part 33, the holding ring part 331 which holds the seal ring 4 may be formed as a separate body. Moreover, another seal member, a liquid packing, etc., that prevent leakage of the fluid filled in the filling groove 41 may be interposed between the holding ring part 331 and the seal ring 4.

### Reference Signs List

- 1: bearing seal structure
- 2: shaft
- 3: bearing
- 4: seal ring
- 31: ring fitting groove
- 32: fluid injection hole
- 33: groove lid part
- 331: holding ring part
- 34: bolt
- 35: check valve
- 41: filling groove

## Claims

1. A bearing seal structure comprising: a shaft that performs at least one movement of sliding and rotation; a bearing that supports the shaft; and a seal ring that maintains watertightness between the shaft and the bearing, wherein
the bearing has a ring fitting groove formed on an inner circumferential surface into which the seal ring is to be fitted, and a fluid injection hole penetrating from the ring fitting groove to an outside of the bearing, and
the seal ring has a filling groove configured to be filled with a fluid injected from the fluid injection hole along an outer circumferential surface of the seal ring, and the seal ring is made of an elastic material capable of reducing a diameter until a gap between the seal ring and the shaft is filled with a pressure applied when the fluid is injected into the filling groove.

2. The bearing seal structure according to claim 1, wherein
one side surface constituting the ring fitting groove of the bearing is a groove lid part that is removable, and in a closed state of the groove lid part, a width of the ring fitting groove is narrower than a width of the seal ring, and
the seal ring is fitted into the ring fitting groove and clamped by the groove lid part such that the seal ring is caused to bulge toward an inner circumference side until the gap between the seal ring and the shaft is filled.
